# EUROPÄISCHE PATENTSCHRIFT

(11) **EP 1 326 800 B1**
(45) Veröffentlichungstag und Bekanntmachung des Hinweises auf die Patenterteilung: **17.12.2008**
(21) Anmeldenummer: 01986663.1
(22) Anmeldetag: 05.10.2001
(51) Int. Cl.: C01B 17/90, C01B 17/50, C01B 17/94

(54) **VERFAHREN ZUR ENTFERNUNG VON NITROSYLSCHWEFELSÄURE AUS DEM SCHWEFELSÄUREPROZESS**
METHOD FOR REMOVING NITROSYL SULPHURIC ACID FROM THE SULPHURIC ACID PROCESS
PROCEDE POUR ELIMINER L'ACIDE NITROSYLSULFURIQUE FORME DANS UN PROCESSUS DE PRODUCTION D'ACIDE SULFURIQUE

(30) Priorität: 11.10.2000 DE 10050526
(43) Veröffentlichungstag der Anmeldung: 16.07.2003
(73) Patentinhaber: Sachtleben Chemie GmbH, 47198 Duisburg (DE)
(72) Erfinder: FACH, Roland, 46514 Schermbeck (DE)
(74) Vertreter: Uppena, Franz
(86) Internationale Anmeldenummer: PCT/EP2001/011495
(87) Internationale Veröffentlichungsnummer: WO 2002/030813

(56) Entgegenhaltungen:
- WO-A-00/12429
- GB-A- 402 229
- GB-A- 1 538 113

## Beschreibung

Die Erfindung betrifft ein Verfahren zur Entfernung von Nitrosylschwefelsäure aus dem Schwefelsäureprozess.

In der DE 19644546 C1 ist ein Verfahren zur Herstellung von Schwefelsäure aus Gasen, die SO₃ und gasförmige Nitrosylschwefelsäure enthalten (Gase des Schwefelsäureprozesses), beschrieben. Unter Nitrosylschwefelsäure ist dabei das Kondensationsprodukt (HNOSO₄) aus den gasförmigen Komponenten NO, NO₂, SO₃ und H₂O zu verstehen. Bei diesem Verfahren werden die Gase vor dem Kontaktieren mit Schwefelsäure durch mindestens einen Kühler geleitet und auf 160 bis 130 °C abgekühlt, wobei die Nitrosylschwefelsäure auskondensiert und aus dem Kühler abgeführt wird. Von Nachteil bei diesem Verfahren ist dass die erhaltene flüssige Nitrosylschwefelsäure einer weiteren Verwendung zugeführt werden muss.

Solch eine weitere Verwendung ist in der EP 912441 beschrieben, in der die Nitrosylschwefelsäure mit H₂SO₄, die zum Teil im Kreislauf geführt wird und mit SO₂ gesättigt ist, gemischt wird, wobei sich aus einem Teil der Nitrosylschwefelsäure N₂ bildet. Nachteil der beschriebenen Verwendung ist folgende Abhängigkeit: Je höher die Konzentration der im Kreislauf geführten H₂SO₄ ist, desto niedriger ist der Denitrierungsumsatz, und umgekehrt. D.h. bei einem gewünschtem hohen Denitrierungsumsatz wird nur eine relativ dünne Schwefelsäure erhalten.

In der DE 4002465 A1 wird ein Verfahren zur Herstellung von Schwefelsäure beschrieben, bei dem Schwefel mit Luftsauerstoff unter Zusatz von trockenen SO₂-haltigen Gasen, die bis zu 5000 ppm (NO)ₓ enthalten, verbrannnt wird. Dabei wird die Bildung von (NO)ₓ (und damit die Bildung von Nitrosylschwefelsäure) minimiert. Von Nachteil dieses Verfahrens ist, dass es sich nicht ohne weiteres nachträglich in Anlagen zur Herstellung von Schwefelsäure, in denen bereits als ungewünschtes Nebenprodukt Nitrosylschwefelsäure entsteht, integrieren lässt.

Die WO 00/12429 beschreibt die Mischung von Nitrosylschwefelsäure mit wässriger, SO₂-gesättigter Schwefelsäure (Anspruch 1). Dabei reagiert ein Teil der flüssigen Nitrosylschwefelsäure mit dem SO₂ zu N₂ und Schwefelsäure. Aus der nicht umgesetzten Nitrosylschwefelsäure entsteht NOₓ, das mit dem überschüssigen SO₂ der Absorberzone als Gas entzogen wird. Das abgezogene Gasgemisch aus NOₓ und SO₂ wird auf Temperaturen im Bereich von 700 bis 1300 °C erhitzt.

Die GB 402229 A beschreibt die gleichzeitige Herstellung von Schwefelsäure und Salpetersäure. U.a. wird dabei Nitrosylschwefelsäure bei 130 bis 140 °C durch Wasser, Wasserdampf oder verdünnte Salpetersäure und Wasserdampf zersetzt (Seite 3, rechte Spalte, letzter Absatz), wobei durch anschließende Destillation Salpetersäure gewonnen wird.

Die GB-A-1538113 beschreibt die Abtrennung von SO₂ von einem feuchten, SO₂-haltigen Gas bei der Herstellung von Schwefelsäure nach dem Nitratverfahren. Dabei wird u.a. NOₓ enthaltende Schwefelsäure auf über 60 °C erhitzt und mit einem SO₂-enthaltendem Gasstrom in Kontakt gebracht (Anspruch 1).

Aufgabe der vorliegenden Erfindung ist es, die Nachteile des Standes der Technik zu überwinden, die beim Schwefelsäureprozess anfallende Nitrosylschwefelsäure gänzlich zu beseitigen und somit die Nachteile der in der EP 912441 beschriebenen Verwendung der Nitrosylschwefelsäure zu vermeiden.

Gelöst wird die Aufgabe durch ein Verfahren, bei dem die Nitrosylschwefelsäure aus dem Schwefelsäureprozess auf 600 bis 1400 °C erhitzt wird, wobei die Nitrosylschwefelsäure in SO₂, H₂O, N₂ und O₂ zerfällt. Die bei dem Spaltprozess als Zwischenprodukte auftretenden Oxide des Stickstoffs werden bei dem erfindungsgemäßen Verfahren nahezu vollständig zu N₂ und O₂ umgesetzt, ohne dass sich daraus erneut störende Mengen an Stickoxiden bilden.

Die Erhitzung kann in einem Brenner erfolgen. Vorteilhaft ist es, eine im Schwefelsäureprozess zur Erzeugung eines SO₂-haltigen Gases vorhandene Röstung oder Verbrennung als Erhitzungszone zu nutzen. Die Verweilzeit der zu spaltenden Nitrosylschwefelsäure in der Erhitzungszone liegt bevorzugt bei 1 bis 10 Sekunden.

Bevorzugt wird die Nitrosylschwefelsäure mittels Luft über Düsen, z.B. Venturidüsen, feinverteilt der Erhitzungszone aufgegeben.

Nachfolgend wird das erfindungsgemäße Verfahren beispielhaft näher beschrieben:

### Ausführungsbeispiel

In der Schwefelsäurefabrik wurde das in den Filteranlagen (1) der Absorber (2) (Zwischenabsorber (2a) und Endabsorber (2b)) anfallende Nitrosylschwelsäure/Schwefelsäure-Gemisch über beheizte Leitungen (3 und 4) getrennt abgeführt, in einer beheizten Vorlage (5) gesammelt und mittels einer Pumpe (6) aus der Vorlage (5) über eine begleitbeheizte Rohrleitung (7) mittels Luft (8) in einer Venturidüse (9) feinverdüst und in den Röstofen (10) oberhalb der Wirbelschicht eingeleitet.

Im Röstofen (10) wurden in einer Wirbelschicht sulfidisches Erz oder Metallsulfate mit Energieträgern, wie z.B. Kohle oder Schwefel, gemischt, und bei Temperaturen von 750 bis 1100 °C geröstet, bzw. gespalten. Dabei entstand SO₂-haltiges Gas, welches über eine Leitung (11) über den Abhitzekessel (12) in den Zyklon (13) abströmte und anschließend der Gasreinigung (14) (Feinstreinigung des Gases von Feinstäuben und SO₃ in Elektrofiltern, weitere Kühlung über Venturi- und Füllkörperkühlturm und Nasselektrofilter) zugeführt wurde, so dass es als SO₂-Gas zur Schwefelsäureherstellung genutzt werden konnte.

Die zu spaltende Nitrosylschwefelsäure verweilte im Röstofen (10) als Gas 1 bis 10 Sekunden, üblicherweise 2 Sekunden, wobei sie in SO₂, H₂O, N₂ und O₂ zerfiel.

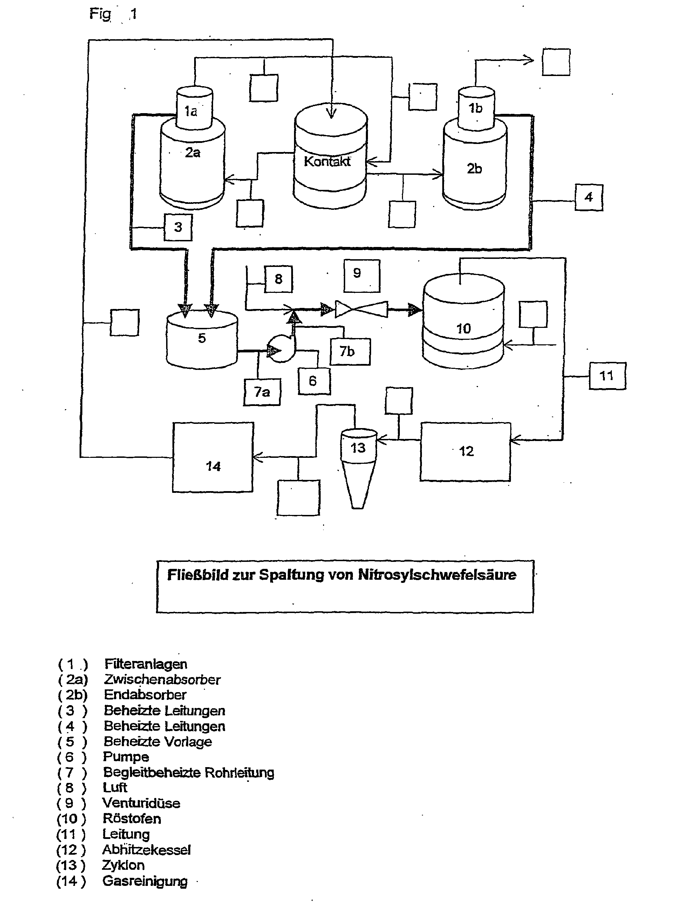

## Patentansprüche

1. Verfahren zur Entfernung von Nitrosylschwefelsäure aus dem Schwefelsäureprozess, **dadurch gekennzeichnet, dass** die Nitrosylschwefelsäure aus dem Schwefelsäureprozess auf 600 bis 1400 °C erhitzt und gespalten wird.

2. Verfahren nach Anspruch 1, **dadurch gekennzeichnet, dass** die Erhitzung der Nitrosylschwefelsäure in einem Brenner erfolgt.

3. Verfahren nach Anspruch 1 oder 2, **dadurch gekennzeichnet, dass** als Erhitzungszone für die Nitrosylschwefelsäurespaltung eine im Schwefelsäureprozess zur Erzeugung eines SO₂-haltigen Gases vorhandene Röstung oder Verbrennung genutzt wird.

4. Verfahren nach einem der Ansprüche 1 bis 3, **dadurch gekennzeichnet, dass** die Verweilzeit der zu spaltenden Nitrosylschwefelsäure in der Erhitzungszone 1 bis 10 Sekunden beträgt.

5. Verfahren nach einem der Ansprüche 1. bis 4, **dadurch gekennzeichnet, dass** die Nitrosylschwefelsäure mittels Luft über Düsen, z.B. Venturidüsen, feinverteilt der Erhitzungszone aufgegeben wird.

## Claims

1. Method for removing nitrosylsulphuric acid from the sulphuric acid process, **characterised in that** the nitrosylsulphuric acid from the sulphuric acid process is heated to 600 to 1400°C and cleaved.

2. Method according to claim 1, **characterised in that** the nitrosylsulphuric acid is heated in a burner.

3. Method according to claim 1 or 2, **characterised in that** roasting or combustion in the sulphuric acid process for producing an SO₂-containing gas is used as a heating zone for the nitrosylsulphuric-acid cleavage.

4. Method according to one of claims 1 to 3, **characterised in that** the dwell time of the nitrosylsulphuric acid to be cleaved in the heating zone amounts to 1 to 10 seconds.

5. Method according to one of claims 1 to 4, **characterised in that** the nitrosylsulphuric acid is fed to the heating zone by means of air by way of nozzles, for example venturi nozzles, in a finely distributed way.

## Revendications

1. Procédé d'élimination de l'acide nitrosyl-sulfurique formé dans un procédé de production d'acide sulfurique, **caractérisé en ce que** l'acide nitrosyl-sulfurique formé dans un procédé de production d'acide sulfurique est décomposé par chauffage à une température de 600 à 1400 °C.

2. Procédé conforme à la revendication 1, **caractérisé en ce que** le chauffage de l'acide nitrosyle sulfurique a lieu dans un brûleur.

3. Procédé conforme à la revendication 1 ou 2, **caractérisé en ce qu'**on utilise, en tant que zone de chauffage pour la décomposition de l'acide nitrosyl-sulfurique, une zone de combustion ou de grillage dédiée, dans le procédé de production d'acide sulfurique, à la production d'un gaz contenant du dioxyde de soufre SO₂.

4. Procédé conforme à l'une des revendications 1 à 3, **caractérisé en ce que** l'acide nitrosyl-sulfurique à décomposer séjourne 1 à 10 secondes dans la zone de chauffage.

5. Procédé conforme à l'une des revendications 1 à 4, **caractérisé en ce que** l'acide nitrosyl-sulfurique est amené à l'état finement divisé dans la zone de chauffage, à l'aide d'air et par une buse, par exemple une buse venturi.
